# FASCICULE DE BREVET EUROPEEN

(11) **EP 1 587 897 B1**
(45) Date de publication et mention de la délivrance du brevet: **12.03.2014**
(21) Numéro de dépôt: 04702352.8
(22) Date de dépôt: 15.01.2004
(51) Int. Cl.: C10G 45/08, B01J 31/02, B01J 31/34

(54) **Procédé d'hydrotraitement d'hydrocarbures utilisant un catalyseur d'hydrotraitement modifié**
Verfahren zur Hydrobehandlung von Kohlenwasserstoffen unter Anwendung eines modifizierten Wasserstoffbehandlungskatalysators
Process for the catalytic hydrotreatment of hydrocarbons using a modified hydrotreating catalyst

(30) Priorité: 16.01.2003 FR 0300439
(43) Date de publication de la demande: 26.10.2005
(73) Titulaire: TOTAL RAFFINAGE MARKETING, 92800 Puteaux (FR)
(72) Inventeur: CHOLLEY, Thierry, B-1180 Bruxelles (BE); DATH, Jean-Pierre, B-7970 Beloeil Hainaut (BE)
(74) Mandataire: Radault, Gabrielle
(86) Numéro de dépôt international: PCT/FR2004/000071
(87) Numéro de publication internationale: WO 2004/067683

(56) Documents cités:
- FR-A- 2 818 990
- US-A- 3 945 914
- US-A- 5 454 933
- US-A- 5 958 224

## Description

La présente invention concerne un procédé d'hydrotraitement d'hydrocarbures utilisant un catalyseur d'hydrotraitement modifié dans un procédé de purification d'hydrocarbures notamment ceux issus de coupes pétrolières de point d'ébullition compris de préférence entre 40 et 560°C.

Actuellement, la demande en composés hydrocarbonés désulfurés, déazotés et déaromatisés s'accroît et de nombreuses études sont menées en vue de développer des catalyseurs de plus en plus efficaces vis-à-vis de la purification des hydrocarbures. Cependant, ces nouveaux catalyseurs, qui visent l'obtention de teneurs en soufre inférieures à 10 ppm, sont beaucoup plus coûteux et ne sont accessibles qu'auprès d'un nombre limité de producteurs. En outre, dès leur première régénération, ces catalyseurs présentent une activité bien inférieure à leur activité initiale à l'état neuf dans les mêmes conditions opératoires. Seul, un traitement supplémentaire de réjuvénation spécifique permet parfois de retrouver cette activité initiale, permettant d'atteindre des teneurs en soufre inférieurs à 10 ppm.

Aujourd'hui, de nombreux catalyseurs dits "classiques", à base de supports d'oxydes réfractaires et contenant des couples métalliques Co/Mo ou Ni/Mo oxydés, sont encore largement utilisés en raffinerie, à l'état neuf ou régénérés, soit en hydrotraitement, soit en hydrocraquage. S'il s'avère impossible d'augmenter notablement leur activité dans des traitements de désulfuration et/ou de déazotation, ces catalyseurs devront à terme être récupérés, stockés ou détruits, lorsque les spécifications sur les teneurs en soufre dans les carburants deviendront si restrictives qu'il ne sera plus possible de les utiliser. Ce stockage ou cette élimination des solides risque en outre d'être soumis à des contraintes environnementales et de sécurité et d'engendrer alors des surcoûts importants pour les raffineurs.

FR 2 818 990 décrit un procédé d'oxydation en présence d'un catalyseur comprenant un métal (liste donnée dont seul Fe est un métal du groupe VIII) pour la désulfuration de thiophènes, avec possible régénération du catalyseur.

US 5 454 933 décrit un procédé d'hydrotraitement d'une charge hydrocarbonée en présence d'un catalyseur d'hydrotraitement comprenant un support d'oxydes réfractaires, au moins un étal du groupe VIII et / ou au moins un métal du groupe VI.

La Demanderesse a donc envisagé de rendre plus efficaces les catalyseurs dits classiques à base d'oxydes réfractaires et de métaux des groupes VI et VIII, en les modifiant par des moyens nouveaux, pour leur conférer des activités en désulfuration et en déazotation au moins équivalentes à celles des meilleurs catalyseurs du marché, et surtout supérieure à ces catalyseurs régénérés.

Tous les catalyseurs d'hydrotraitement ou d'hydrocraquage sont nécessairement sulfurés avant d'être utilisés. Cette sulfuration peut être faite soit in situ, dans le réacteur d'hydrotraitement, soit ex situ, au moyen d'hydrogène sulfuré, de mercaptans, de sulfures, de polysulfures et/ou de soufre natif, ces composés étant introduits seuls, en mélange avec un solvant ou en même temps que la charge. Certains de ces catalyseurs sont modifiés avant sulfuration, cette modification consistant à traiter ces catalyseurs par des composés chélatants ou sulfurants. Il est ainsi connu de modifier ces catalyseurs au moyen d'acides de type thioglycolique ou encore de thioalcools, de composés thioacétoniques et de thiodiazoles ou de thiocyanates tels que proposés notamment par des brevets Sumitomo (EP 289211, EP 300629, EP 338788 , EP 357295, EP 456592, EP 478365 et EP 506206). D'autres catalyseurs ont été modifiés par traitement au moyen de composés organiques alcool-acides (EP 482817), de mono-, di- ou polyalcools éventuellement éthérifiés (EP 601722, US 3954673, US 4012340, WO 01/76741), de composés de types urée, polyamines, EDTA, hydrazine et autres composés azotés (EP 181035, EP 335754, EP 1043069, WO 01/76741, US 3954673 et US 4012340).

Pour modifier et sulfurer les catalyseurs à base d'oxydes réfractaires et de métaux des groupes VI et VIII, le brevet EP 628 347 de EURECAT propose de présulfurer ces catalyseurs classiques par un mélange contenant un premier composé soufré de point de décomposition T₁ inférieur à 220°C et un deuxième composé soufré de point de décomposition T₂ supérieur à 220°C. Le premier composé soufré renferme une structure C-S ou S-S, et le deuxième composé soufré renferme au moins une structure S=O et est choisi parmi les composés de type sulfone ou sulfoxyde, par exemple des alkyl-, des aryl-, des alkylaryl- ou arylalkylsulfones.

Toutes ces modifications visent à améliorer l'efficacité de ces catalyseurs en hydrotraitement, plus particulièrement en désulfuration, mais nécessitent l'utilisation de produits chimiques dont l'industrie du raffinage n'est pas toujours maîtresse. En outre, ces modifications ne permettent pas toujours d'atteindre les teneurs en soufre requises par les spécifications attendues en Europe à l'horizon 2005, dans les distillats moyens issus de la distillation directe ou de coupes raffinées, utilisés comme composants des carburants Diesel.

Dans certains pays comme la Suède, les Etats-Unis, notamment en Californie, et autres, la teneur en soufre total des gazoles est déjà limitée à 0,005 % en poids et cette limitation pourrait se généraliser à terme dans les pays de l'OCDE. Pour l'Europe, cet objectif de 0,005 % en poids de soufre total devrait être atteint en 2005, mais on évoque déjà une teneur de 0,001% à l'échéance 2010.

U.S. 3 945 914 A décrit un procédé de désulfuration d'hydrocarbures, par oxydation d'au moins une partie des hydrocarbures soufrés en présence de composés oxydants (peracides, hydroperoxydes et peroxydes), dans une première étape, puis, dans une deuxième étape, conversion des hydrocarbures soufrés oxydés en sulfures métalliques, après mise en contact de ces composés avec un métal à une température supérieure à 260°C.

Le métal essentiel est le molybdène sous forme solubilisée ou supporté sur un oxyde réfractaire du type alumine, éventuellement associé à un autre métal.

Dans ce procédé en deux étapes, les sulfones et sulfoxydes des dérivés benzothiophèniques, y compris les Sulfones et sulfoxydes des autres composés soufrés majoritaires dans les hydrocarbures, ne peuvent être absorbés par un catalyseur solide, car, à ces températures, ils régissent avec le métal pour former des sulfures métalliques, cette réaction favorisant la désulfuration des hydrocarbures. En outre, selon ce brevet, le support n'est pas critique, car il n'intervient pas dans la réaction de sulfuration du métal (colonne 4, lignes 25 à 29) et il n'y a pas de sulfuration nécessaire du catalyseur.

La Demanderesse a conçu un nouveau type de catalyseur d'hydrotraitement à base d'oxydes réfractaires et de métaux des groupes VI et VIII, permettant d'atteindre une teneur en soufre préfixée avec un gain de température de réaction d'au moins 5 à 25°C par rapport à un catalyseur classique non modifié, toutes autres conditions opératoires de procédé, pression, quantité d'hydrogène et vitesse spatiale horaire (VVH) étant identiques. Un tel gain sur la température de réaction permet d'envisager l'obtention de teneurs en soufre bien inférieures à 50 ppm et même inférieures à 10 ppm, en jouant sur ces mêmes conditions opératoires.

La présente invention a donc pour premier objet un procédé d'hydrotraitement d'hydrocarbures tel que défini dans la revendication 1 utilisant un catalyseur d'hydrotraitement comprenant un support d'oxydes réfractaires, au moins un métal du groupe VIII et au moins un métal du groupe VI, tous deux sous forme oxydée, caractérisé en ce qu'il comprend au moins un composé sulfoné et/ ou sulfoxydé dérivé d'au moins un composé benzothiophénique.

Dans la suite de la présente description, on appellera catalyseur métallique tout catalyseur comprenant un support d'oxydes réfractaires et au moins un métal de chacun des groupes VI et VIII sous forme oxydée.

Par hydrotraitement, on entend tout procédé mettant en jeu l'hydrogène en vue de diminuer les teneurs en soufre des hydrocarbures traités, quelle que soit la coupe raffinée dont ils proviennent ; on entend particulièrement les procédés comprenant un hydrotraitement (désulfuration, déazotation et déaromatisation) ou un hydrocraquage.

Le composé caractéristique du catalyseur conforme à l'invention est choisi parmi les sulfones et sulfoxydes de benzothiophénes, de dibenzothiophénes et plus généralement polyarylthiophénes, substitués ou non par des chaînes hydrocarbonées alkyle ou allyle, comprenant éventuellement des cycles aliphatiques et/ou aromatiques, et il peut être utilisé seul ou en mélange. De préférence, ce composé est un composé sulfoné et/ou sulfoxydé commercial ou un produit résultant de l'oxydation des composés benzothiophéniques contenus dans les coupes hydrocarbonées obtenues par raffinage des pétroles bruts.

Dans un mode préféré de mise en oeuvre de l'invention, l'un au moins des composés sulfonés et/ou sulfoxydés résulte de l'oxydation d'une coupe hydrocarbonée, désulfurée ou non, par un composé oxydant choisi parmi les peroxydes et hydroperoxydes organiques et minéraux, et les peracides organiques ou minéraux, éventuellement en présence d'un catalyseur. Le peroxyde d'hydrogène et le terbutylhydroperoxyde sont parmi les oxydants préférés.

Ainsi, le catalyseur d'hydrotraitement selon l'invention, en présentant des caractéristiques d'activité et de sélectivité comparables, sinon meilleures, que celle des catalyseurs du commerce peut être avantageusement préparé en raffinerie puis être immédiatement utilisable dans cette même raffinerie. Il présente en outre l'avantage de pouvoir être préparé à partir de catalyseurs régénérés déjà disponibles sur place et dont le coût est bien inférieur aux catalyseurs d'hydrotraitement les plus efficaces du marché en matière d'hydrotraitement.

Pour être efficace en hydrotraitement, le catalyseur comprendra au moins 0,01% en poids d'au moins un composé sulfoné et/ou sulfoxydé et, de préférence, de 0,01% à 10% en poids.

Un procédé de préparation du catalyseur d'hydrotraitement comprend nécessairement une étape de formation et/ou de dépôt de composés sulfonés et/ou sulfoxydés en surface d'un catalyseur métallique. Le dépôt de ces composés peut se faire par imprégnation, greffage ou formation à la surface du catalyseur.

Plus particulièrement, le procédé consiste à introduire dans un réacteur contenant le catalyseur métallique, un fluide organique contenant au moins un composé benzothiophénique et un composé oxydant du groupe constitué par les peroxydes et les hydroperoxydes organiques ou minéraux, et les peracides organiques ou minéraux, à partir de la température ambiante et à pression atmosphérique, puis à récupérer le catalyseur supportant les composés sulfoxydés et /ou sulfonés formés.

Le fluide organique utilisé est choisi parmi les hydrocarbures paraffiniques, aromatiques et naphténiques et les solvants des composés benzothiophéniques comme le benzène, le toluène et/ou le xylène, et des coupes hydrocarbonées résultant du raffinage de pétroles bruts. Dans un mode préféré, le fluide organique est une coupe hydrocarbonée de points d'ébullition minimum et maximum variant de 40 à 560°C.

Dans son mode de réalisation préféré, le procédé de préparation du catalyseur d'hydrotraitement consiste à pratiquer une désulfuration oxydante d'une coupe hydrocarbonée de points d'ébullition mini et maxi variant de 40 à 560°C, en présence du catalyseur métallique. De préférence, ce catalyseur métallique comprend un support en silice et/ou en alumine et une combinaison de métaux des groupes VI et VIII, sous forme oxydée, choisie dans le groupe constitué par les combinaisons nickel/molybdène, cobalt/molybdène, nickel/tungstène, nickel/cobalt/molybdène et nickel/ tungstène/molybdène.

Ce catalyseur métallique peut être un catalyseur fraîchement préparé ou commercial, et il sera utilisé neuf ou après régénération, c'est-à-dire essentiellement après combustion du coke déposé sur ce catalyseur pendant une opération d'hydrotraitement, dans le cadre de la présente invention.

Ce procédé de préparation peut être mis en oeuvre soit ex situ, avant chargement dans le réacteur d'hydrotraitement, soit in situ, dans le réacteur qui sera utilisé ultérieurement comme réacteur d'hydrotraitement.

Un objet de l'invention est l'utilisation de ce catalyseur dans un procédé d'hydrotraitement d'hydrocarbures, après sulfuration in situ ou ex situ de ce catalyseur au moyen d'au moins un composé soufré choisi parmi l'hydrogène sulfuré, les mercaptans, les sulfures et/ou les polysulfures et autres composés sulfurants, ce composé étant introduit sous forme gazeuse, sous forme liquide après dilution du solide ou du liquide dans un solvant ou directement sous forme liquide, éventuellement même comme additif de la charge à hydrotraiter. Cette sulfuration peut également être réalisée par la seule charge à hydrotraiter.

Un objet de l'invention est un procédé de purification, jusqu'à moins de 10 ppm de soufre, d'une charge hydrocarbonée soufrée, azotée et/ou aromatique, ce procédé comprenant une première étape d'hydrotraitement du distillat en présence du catalyseur métallique modifié de l'invention, après sulfuration de celui-ci, et une deuxième étape de désulfuration oxydante de la charge hydrotraitée.

Dans un mode préféré de ce procédé de purification, la désulfuration oxydante de la charge hydrotraitée est effectuée en présence d'un catalyseur métallique et d'un oxydant choisi parmi les peroxydes et les hydroperoxydes organiques ou minéraux, et les peracides organiques ou minéraux. De préférence, l'oxydant est le peroxyde d'hydrogène ou le terbutylhydroperoxyde. Le catalyseur métallique comprendra avantageusement un support en silice et/ou en alumine et une combinaison de métaux des groupes VI et VIII, sous forme oxydée, combinaison choisie dans le groupe constitué par les combinaisons nickel/molybdène, cobalt/molybdène, nickel/tungstène, nickel/cobalt/molybdène et nickel/tungstène/molybdène.

Dans un mode privilégié de mise en oeuvre l'invention, notamment lorsque les opérations d'hydrotraitement et de désulfuration oxydante sont opérées dans la même raffinerie, le catalyseur métallique usé, mais modifié selon l'invention, obtenu en fin de cycle de désulfuration oxydante, est utilisé comme catalyseur d'hydrotraitement après sulfuration ex situ ou in situ dans le réacteur d'hydrotraitement. La fin du cycle de désulfuration oxydante peut correspondre avantageusement au moment où la teneur en soufre total de l'effluent remonte au-dessus de 10 ppm.

Compte tenu de ce qui précède, le procédé selon l'invention peut être mis en oeuvre dans un même réacteur ou dans au moins deux réacteurs distincts, par exemple disposés en série.

Dans la configuration utilisant deux réacteurs distincts, ceux-ci peuvent fonctionner alternativement en hydrotraitement et en désulfuration oxydante, chaque réacteur effectuant un traitement différent au cours d'un même cycle de purification. L'avantage de cette forme de mise en oeuvre est que seul le catalyseur utilisé en hydrotraitement doit être déchargé et régénéré avant d'être réutilisé en désulfuration oxydante. De plus, le catalyseur issu de la désulfuration oxydante présente une activité bien meilleure que s'il avait été utilisé directement en hydrotraitement.

Une autre configuration prévoit que l'un des deux réacteurs fonctionne toujours en hydrotraitement et l'autre toujours en désulfuration oxydante : le catalyseur en fin de cycle de désulfuration oxydante est alors déchargé puis rechargé dans le réacteur d'hydrotraitement et enfin sulfuré selon les méthodes classiques. Par ailleurs, un catalyseur métallique classique d'hydrotraitement et non modifié est chargé dans le réacteur de désulfuration oxydante. Comme dans la précédente configuration, le catalyseur d'hydrotraitement doit toujours être régénéré.

Le procédé de purification est particulièrement adapté à une charge hydrocarbonée de points d'ébullition minimum et maximum allant de 40 à 560°C, cette charge pouvant provenir notamment d'une distillation atmosphérique, d'une distillation sous vide, d'un craquage catalytique FCC, d'un hydrocraquage, d'un cokage ou d'une viscoréduction.

Les exemples qui suivent visent à illustrer l'invention mais n'ont aucun caractère limitatif.

### EXEMPLE I

Dans le présent exemple, on décrit la préparation de cinq catalyseurs sulfurés qui seront utilisés ultérieurement en désulfuration, déazotation et déaromatisation. Tous ces catalyseurs sont préparés à partir d'un catalyseur commercial A, constitué d'une combinaison à 3% de cobalt et à 10% de molybdène sur un support d'alumine, disponible sur le marché et utilisé communément par les raffineurs dans leurs unités d'hydrodésulfuration.

Les traitements de modification et/ou de sulfuration appliqués à ce catalyseur sont résumés dans le Tableau I ci-après.

**TABLEAU I**

| Catalyseur | Traitement | Modification | Sulfuration |
|---|---|---|---|
| A | Aucun | Aucune | GO₁ + 2% en poids DMDS |
| B | Ex situ | GO₁ seul | GO₁ + 2% en poids DMDS |
| C | In situ | GO₁ seul | GO₁ + 2% en poids DMDS |
| D | Ex situ | GO₁ + 6,3% en poids TBHP | GO₁ + 2% en poids DMDS |
| E | In situ | GO₁ + 6,3% en poids TBHP | GO₁ + 2% en poids DMDS |
| F | Ex situ | dBTS | GO₁ + 2% en poids DMDS |
| G | In situ | GO₂ + 6,3% en poids TBHP | GO₁ + 2% en poids DMDS |

| | | | |
|---|---|---|---|
| *TBHP= solution 5M de terbutylhydroperoxyde dans du décane. *dBTS= sulfone de dibenzothiophène à 5% dans de l'éthanol. *DMDS= diméthyldisulfure *GO₁ :gazole à 1% de soufre et *GO₂ : gazole à 50 ppm de soufre. | | | |

La modification ex situ au moyen de gazole contenant du TBHP est effectuée comme suit.

On ajoute à 600 g de gazole (GO₁) de distillation directe à 1 % en poids de soufre (environ 700 ml) placé dans un ballon, 38 g de la solution de TBHP. Puis on ajoute à ce mélange 100 g du catalyseur A. On agite modérément l'ensemble pendant 3 heures à 70°C. Le catalyseur modifié est ensuite récupéré par filtration, puis lavé à trois reprises avec 200 ml de toluène à température ambiante, et enfin avec 3 fois 200 ml de pentane à température ambiante. Le catalyseur ainsi récupéré, est séché 3 heures à 80°C sous air, en étuve ventilée.

La modification in situ consiste à introduire dans le réacteur d'un pilote de type CATATEST, 100 ml du catalyseur A. On fait circuler sur ce catalyseur un gazole (GO₁ ou GO₂), dans lequel a été ajoutée la solution de TBHP, à une vitesse spatiale horaire (WH) de 1 h⁻¹, sous pression atmosphérique, à une température de 70°C. Après 7 heures (GO₁) ou 70 heures (GO₂), l'injection de gazole additivé est stoppée. On fait circuler en mode à flux descendant un léger courant d'azote, dans le but d'éliminer l'excédent de gazole contenu dans le réacteur.

La modification ex situ au moyen de sulfone de dibenzothiophène (dBTS) est identique à la modification au moyen de gazole et de TBHP, si ce n'est qu'on remplace le mélange gazole/TBHP par la sulfone commerciale en solution dans l'éthanol.

Les catalyseurs B et C ont été obtenus en mouillant le catalyseur A avec du gazole de distillation directe, seul, à 1% en poids de soufre en opérant comme décrit précédemment pour les modifications ex situ et in situ. Ils constituent des catalyseurs de comparaisons avec les quatre autres catalyseurs, D, E, F et G, conformes à l'invention.

Les catalyseurs ont tous été sulfurés avec un gazole additivé de 2 % en poids de DMDS, selon la procédure recommandée par le fabricant du catalyseur A.

### EXEMPLE II

Le présent exemple est destiné à montrer que les catalyseurs de l'invention ont une activité en hydrodésulfuration et déazotation bien supérieure à celle obtenue avec le catalyseur A commercial non modifié.

Les catalyseurs A, B, C, D, E, F et G de l'Exemple 1 sont soumis dans un réacteur tubulaire d'un pilote d'hydrotraitement, fonctionnant en flux descendant, à une première étape de stabilisation par hydrotraitement d'un gazole de distillation directe. Ensuite, on hydrotraite une charge hydrocarbonée contenant 75% en volume de gazole de distillation directe et 25% en volume d'une coupe hydrocarbonée 220-350°C, issue de craquage catalytique, usuellement appelée LCO (Light Cycle Oil). Les caractéristiques du mélange sont données dans le Tableau II ci-dessous.

**TABLEAU II**

| Type de charge | | Mélange 25% LCO-75% GO | GO₁ | GO₂ |
|---|---|---|---|---|
| Soufre (ppm) | | 14447 | 10117 | 49 |
| Densité à 15°C (g/ml) | | 0,8684 | 0,8579 | 0,8501 |
| Mono-aromatiques (% en poids) | | 18,7 | 14,8 | 28 |
| Di-aromatiques (% en poids) | | 14,8 | 13 | 5 |
| Tri-aromatiques (% en poids) | | 2,8 | 1,6 | 1 |
| Total aromatiques (% en poids) | | 36,3 | 29,4 | 34 |
| | Azote (ppm) | 228 | 158 | 29,7 |
| | ASTM D86 (°C) | | | |
| | Point initial | 203 | 244 | 201 |
| | 5 vol% | 230 | 264 | 229 |
| | 10 vol% | 244 | 273 | 241 |
| | 20 vol% | 257 | 280 | 255 |
| | 30 vol% | 268 | 286 | 266 |
| | 40 vol% | 278 | 293 | 276 |
| | 50 vol% | 289 | 299 | 287 |
| | 60 vol% | 301 | 306 | 298 |
| | 70 vol% | 314 | 314 | 311 |
| | 80 vol% | 329 | 324 | 326 |
| | 90 vol% | 347 | 339 | 347 |
| | 95 vol% | 359 | 350 | 363 |
| | Point final | 363 | 352 | 365 |

Les conditions opératoires sont données dans le Tableau III ci-dessous.

**TABLEAU III**

| | |
|---|---|
| Pression | 27.10⁵ Pa |
| VVH | 1 h⁻¹ |
| Rapport H₂/mélange huile | 130 Nl/l |

Pour comparer les activités en désulfuration et en déazotation, on ajuste la température de réaction de manière à atteindre soit 98% de désulfuration, soit 50% de déazotation de la charge hydrotraitée. Plus cette température pour un catalyseur donné est basse par rapport à la température correspondante pour le catalyseur de référence A, plus ce catalyseur est actif en désulfuration ou en déazotation.

Pour le catalyseur de référence A, les températures référencées T_{HDS} et T_{HDN} respectivement pour l'hydrodésulfuration et la déazotation correspondent aux températures requises pour atteindre 98% de désulfuration et 50% de déazotation

Les résultats des tests sont donnés dans le tableau IV ci-après.

**TABLEAU IV**

| A | B | C | D | E | F | G |
|---|---|---|---|---|---|---|
| T_{HDS} | T_{HDS}-1°C | T_{HDS}-2°C | T_{HDS}-19°C | T_{HDS}-18°C | T_{HDS}-15°C | T_{HDS}-19°C |
| T_{HDN} | T_{HDN}-2°C | T_{HDN}-3°**C** | T_{HDN}-28°C | T_{HDN}-26°C | T_{HDN}-20°C | T_{HDN}-27°C |

Les catalyseurs D, E, F et G (conformes à l'invention) présentent une activité en HDS et en HDN très supérieure à celle du catalyseur de référence A, alors que les catalyseurs B et C présentent une activité équivalente à celle du catalyseur A.

### EXEMPLE III

Le présent exemple compare les activités d'un catalyseur neuf d'hydrotraitement modifié selon l'invention et de ce même catalyseur régénéré après un cycle d'hydrotraitement, puis modifié selon l'invention.

Après un premier cycle d'hydrotraitement, le catalyseur G de l'Exemple II est régénéré par combustion du coke sous atmosphère oxydante à 450°C, pendant au moins 5 heures. Le catalyseur régénéré est modifié comme décrit dans l'Exemple II pour le catalyseur G, et on obtient un catalyseur G', qui est ensuite sulfuré comme décrit dans l'Exemple II. Un nouveau cycle d'hydrotraitement identiques au cycle appliqué au catalyseur G, est alors mis en oeuvre.

Dans le Tableau V, les températures requises d'hydrotraitement avec G et G' sont comparées par rapport au catalyseur de référence A.

**TABLEAU V**

| A | G | G' |
|---|---|---|
| T_{HDS} | T_{HDS}-19°C | T_{HDS}-18°C |
| T_{HDN} | T_{HDN}-27°C | T_{HDN}-25°C |

D'après ce Tableau, on constate qu'après régénération et nouvelle modification selon l'invention, le catalyseur commercial régénéré retrouve quasiment les mêmes performances que le catalyseur neuf modifié.

## Revendications

1. Procédé d'hydrotraitement d'hydrocarbures utilisant un catalyseur d'hydrotraitement modifié comprenant un support d'oxydes réfractaires, au moins un métal du groupe VIII et au moins un métal du groupe VI, tous deux sous forme oxydée **caractérisé en ce qu'**il comprend au moins un sulfone et/ou sulfoxyde de polyarylthiophéne dérivé d'au moins un composé benzothiophénique, l'hydrotraitement étant réalisé après sulfuration in situ ou ex situ de ce catalyseur par au moins un composé soufré choisi parmi l'hydrogène sulfuré, les mercaptans, les sulfures et/ou les polysulfures et autres composés sulfurants ou par la charge à hydrotraiter.

2. Procédé d'hydrotraitement selon la revendication 1, **caractérisé en ce que** le dit composé est choisi parmi les sulfones et sulfoxydes de benzothiophènes, de dibenzothiophènes et plus généralement de polyarylthiophènes, substitués ou non par des chaînes hydrocarbonées alkyle ou allyle comprenant éventuellement des cycles aliphatiques et/ou aromatiques, ce composé étant utilisé seul ou en mélange avec d'autres composés du même groupe.

3. Procédé d'hydrotraitement selon l'une des revendications 1 à 2, **caractérisé en ce que** le dit composé est un composé sulfoné et/ou sulfoxydé commercial ou provenant de l'oxydation des composés benzothiophèniques contenus dans les coupes hydrocarbonées obtenues par raffinage des pétroles bruts.

4. Procédé d'hydrotraitement selon l'une des revendications 1 à 3, **caractérisé en ce que** l'un au moins des composés sulfonés et/ou sulfoxydés résulte de l'oxydation d'une coupe hydrocarbonée, désulfurée ou non, par un composé oxydant choisi parmi les peroxydes et hydroperoxydes organiques et minéraux et les peracides organiques ou minéraux, éventuellement en présence d'un catalyseur métallique.

5. Procédé d'hydrotraitement selon l'une des revendications 1 à 4, **caractérisé en ce que** le catalyseur comprend au moins 0,01% en poids d'au moins un composé sulfoné et/ou sulfoxydé.

6. Procédé d'hydrotraitement selon l'une quelconque des revendications 1 à 5, **caractérisé en ce que** le catalyseur comprend un support en silice et/ou en alumine et une combinaison de métaux des groupes VI et VIII, sous forme oxydée, choisie dans le groupe constitué par les combinaisons nickel/molybdène, cobalt/molybdène, nickel/tungstène, nickel/cobalt/ molybdène et nickel/tungstène/molybdène.

7. Procédé d'hydrotraitement selon l'une quelconque des revendications 1 à 6, **caractérisé en ce que** le catalyseur métallique est neuf ou régénéré.

8. Procédé d'hydrotraitement selon l'une des revendications 1 à 7 pour la purification jusqu'à moins de 10 ppm de soufre d'une charge hydrocarbonée soufrée, azotée et/ou aromatique, comprenant, après l'hydrotraitement de la charge tel que défini selon l'une des revendications 1 à 7, une deuxième étape de désulfuration oxydante de la charge hydrotraitée.

9. Procédé selon la revendication 8, **caractérisé en ce que** la désulfuration oxydante est effectuée en présence d'un catalyseur métallique à base d'oxydes réfractaires supportant au moins un métal de chacun des groupes VI et VIII et d'un oxydant choisi parmi les peroxydes et les hydroperoxydes organiques ou minéraux, et les peracides organiques ou minéraux, le peroxyde d'hydrogène et le terbutylhydroperoxyde étant préférés.

10. Procédé selon la revendication 9, **caractérisé en ce que** le catalyseur métallique modifié obtenu en fin de cycle de désulfuration oxydante est utilisé comme catalyseur d'hydrotraitement, après sulfuration ex situ ou in situ dans le réacteur d'hydrotraitement.

11. Procédé selon l'une quelconque des revendications 8 à 10, **caractérisé en ce qu'**il est mis en oeuvre dans un même réacteur ou dans au moins deux réacteurs distincts.

12. Procédé selon la revendication 11, **caractérisé en ce que** les deux réacteurs distincts fonctionnent alternativement en hydrotraitement et en désulfuration oxydante, chacun effectuant un traitement différent.

13. Procédé selon la revendication 11, **caractérisé en ce que** l'un des réacteurs fonctionne toujours en hydrotraitement et l'autre toujours en désulfuration oxydante.

14. Procédé selon l'une quelconque des revendications 8 à 13, **caractérisé en ce que** la charge hydrocarbonée est une charge hydrocarbonée de points d'ébullition minimum et maximum compris entre 40 à 560°C.

## Patentansprüche

1. Verfahren zur Hydrobehandlung von Kohlenwasserstoffen unter Verwendung eines modifizierten Hydrobehandlungskatalysators, der einen Träger aus hitzebeständigen Oxiden, zumindest ein Metall der Gruppe VIII und zumindest ein Metall der Gruppe VI, beide in oxidierter Form, enthält
**dadurch gekennzeichnet, dass**
er zumindest ein Sulfid und/oder Sulfoxid von Polyarylthiophen enthält, das aus zumindesteiner Benzothiophenverbindung hergeleitet ist,
wobei die Hydrobehandlung durchgeführt wird nach einer Verschwefelung des Katalysators in situ oder ex situ mit einer Schwefelverbindung, die gewählt ist aus Schwefelwasserstoff, Mercaptanen, Sulfiden und/oder Polysulfiden und anderen Schwefelverbindungen oder mit einer der Hydrobehandlung zu unterziehenden Charge.

2. Verfahren zur Hydrobehandlung gemäß Anspruch 1, **dadurch gekennzeichnet, dass**
die Verbindung gewählt ist aus Sulfiden und Sulfoxiden von Benzothiophenen, von Dibenzothiophenen und allgemeiner von Polyarylthiophenen, substituiert oder nicht durch Ketten von Alkyl- oder Allylkohlenwasserstoffen, die möglicherweise aliphatische und/oder aromatische Cyclen enthalten,
wobei die Verbindung alleine oder als Mischung mit anderen Verbindungen derselben Gruppe verwendet wird.

3. Verfahren zur Hydrobehandlung gemäß einem der Ansprüche 1 bis 2, **dadurch gekennzeichnet, dass** die Verbindung eine marktgängige Sulfid- und/oder Sulfoxidverbindung ist oder aus der Oxidation von Benzothiophenverbindungen hervorgeht, die in Kohlenwasserstoffverschnitten enthalten sind, die durch Raffinieren von Rohölen gewonnen werden.

4. Verfahren zur Hydrobehandlung gemäß einem der Ansprüche 1 bis 3, **dadurch gekennzeichnet, dass** zumindest eine der Sulfid- und/oder Sulfoxidverbindungen aus der Oxidation eines entschwefelten oder nicht entschwefelten Kohlenwasserstoffverschnitts mittels einer Oxidansverbindung hervorgeht, die gewählt ist aus organischen und mineralischen Peroxiden und Hydroperoxiden und organischen und mineralischen Persäuren, möglicherweise in Anwesenheit eines metallischen Katalysators.

5. Verfahren zur Hydrobehandlung gemäß einem der Ansprüche 1 bis 4, **dadurch gekennzeichnet, dass** der Katalysator mindestens 0,01 Gew.-% zumindest einer Sulfid- und/oder Sulfoxidverbindung enthält.

6. Verfahren zur Hydrobehandlung gemäß einem der Ansprüche 1 bis 5, **dadurch gekennzeichnet, dass** der Katalysator einen Träger aus Siliziumdioxid und/oder Aluminiumoxid und eine Kombination von Metallen der Grupppen VI und VIII in oxidierter Form enthält, die gewählt sind aus der Gruppe, die gebildet ist aus den Kombinationen Nickel-Molybdän, Kobalt-Molybdän, Nickel-Wolfram, Nickel-Kobalt-Molybdän und Nickel-Wolfram-Molybdän.

7. Verfahren zur Hydrobehandlung gemäß einem der Ansprüche 1 bis 6, **dadurch gekennzeichnet, dass** der metallische Katalysator neu oder regeneriert ist.

8. Verfahren zur Hydrobehandlung gemäß einem der Ansprüche 1 bis 7 für das Reinigen einer schwefelhaltigen, stickstoffhaltigen und/oder aromatischen Kohlenwasserstoffcharge bis auf weniger als 10 ppm Schwefel, das nach der Hydrobehandlung der Charge, wie sie in einem der Ansprüche 1 bis 7 definiert ist, einen zweiten Schritt enthält der oxidierenden Entschwefelung der hydrobehandelten Charge.

9. Verfahren zur Hydrobehandlung gemäß Anspruch 8, **dadurch gekennzeichnet, dass** die oxidierende Entschwefelung durchgeführt wird in Anwesenheit eines metallischen Katalysators auf der Basis von hitzebeständigen Oxiden, die zumindest ein Metall aus jeder der Gruppen VI und VIII tragen, und eines Oxidans, das gewählt ist aus organischen und mineralischen Peroxiden und Hydroperoxiden und organischen und mineralischen Persäuren, wobei Wasserstoffperoxid und Terbuthylhydroperoxid bevorzugt sind.

10. Verfahren zur Hydrobehandlung gemäß Anspruch 9, **dadurch gekennzeichnet, dass** der modifizierte metallische Katalysator, der am Ende des Zyklus der oxidierenden Entschwefelung gewonnen wird, wird nach einer Verschwefelung in situ oder ex situ in dem Reaktor zur Hydrobehandlung als Katalysator für die Hydrobehandlung verwendet wird.

11. Verfahren zur Hydrobehandlung gemäß einem der Ansprüche 8 bis 10, **dadurch gekennzeichnet, dass** es in demselben Reaktor oder in zumindest zwei verschiedenen Reaktoren durchgeführt wird.

12. Verfahren zur Hydrobehandlung gemäß Anspruch 11, **dadurch gekennzeichnet, dass**
die zwei verschiedenen Reaktoren alternativ zur Hydrobehandlung oder zur oxidierenden Entschwefelung dienen,
wobei jeder eine andere Verarbeitung durchführt.

13. Verfahren zur Hydrobehandlung gemäß Anspruch 11, **dadurch gekennzeichnet, dass** der eine Reaktor immer zur Hydrobehandlung und der andere Reaktor immer zur oxidierenden Entschwefelung dient.

14. Verfahren zur Hydrobehandlung gemäß einem der Ansprüche 8 bis 13, **dadurch gekennzeichnet, dass** die Kohlenwasserstoffcharge eine Kohlenwasserstoffcharge ist, deren minimale und maximale Siedepunkte zwischen 40 und 560°C liegen.

## Claims

1. A process for the hydrotreating of hydrocarbons using a modified hydrotreating catalyst comprising a support formed of refractory oxides, at least one metal from Group VIII and at least one metal from Group VI, both in the oxidized form, **characterized in that** it comprises at least one sulfone and/or sulfoxide of polyarylthiophenes compound derived from at least one benzothiophene compound, the hydrotreating being performed after in situ or ex situ sulfurization of this catalyst by at least one sulfur compound chosen from hydrogen sulfide, mercaptans, sulfides and/or polysulfides and other sulfurizing compounds or by the feedstock to be hydrotreated.

2. The hydrotreating process as claimed in claim 1, **characterized in that** said compound is chosen from sulfones and sulfoxides of benzothiophenes, of dibenzothiophenes, which may or may not be substituted by alkyl or allyl hydrocarbon chains optionally comprising aliphatic and/or aromatic rings, this compound being used alone or as a mixture with other compounds of the same group.

3. The hydrotreating process as claimed in either of claims 1 and 2, **characterized in that** said compound is a commercial sulfone and/or sulfoxide compound or a sulfone and/or sulfoxide compound originating from the oxidation of the benzothiophene compounds present in the hydrocarbon fractions obtained by refining crude oils.

4. The hydrotreating process as claimed in one of claims 1 to 3, **characterized in that** at least one of the sulfone and/or sulfoxide compounds results from the oxidation of a desulfurized or nondesulfurized hydrocarbon fraction by an oxidizing compound chosen from organic and inorganic peroxides and hydroperoxides and organic or inorganic peracids, optionally in the presence of a metal catalyst.

5. The hydrotreating process as claimed in one of claims 1 to 4, **characterized in that** it comprises at least 0.01% by weight of at least one sulfone and/or sulfoxide compound.

6. The hydrotreating process as claimed in one of claims 1 to 5, **characterized in that** the catalyst comprises a support made of silica and/or of alumina and a combination of metals from Groups VI and VIII, in the oxidized form, chosen from the group consisting of nickel/molybdenum, cobalt/molybdenum, nickel/tungsten, nickel/cobalt/molybdenum and nickel/tungsten/molybdenum combinations.

7. The hydrotreating process as claimed in one of claims 1 to 6, **characterized in that** the metal catalyst is fresh or regenerated.

8. A hydrotreating process as claimed in one of claims 1 to 7 for the purification, down to less than 10 ppm of sulfur, of a sulfur-comprising, nitrogen-comprising and/or aromatic hydrocarbon feedstock, comprising after the hydrotreating of the feedstock as defined in one of claims 1 to 7, a second stage of oxidizing desulfurization of the hydrotreated feedstock.

9. The process as claimed in claim 8, **characterized in that** the oxidizing desulfurization is carried out in the presence of a metal catalyst based on refractory oxides supporting at least one metal from each of Groups VI and VIII and of an oxidizing agent chosen from organic or inorganic peroxides and hydroperoxides and organic or inorganic peracids, hydrogen peroxide and tert-butyl hydroperoxide being preferred.

10. The process as claimed in claim 9, **characterized in that** the modified metal catalyst obtained at the end of the oxidizing desulfurization cycle is used as hydrotreating catalyst, after ex situ sulfurization or in situ sulfurization in the hydrotreating reactor.

11. The process as claimed in one of claims 8 to 10, **characterized in that** it is carried out in the same reactor or in at least two separate reactors.

12. The process as claimed in claim 11, **characterized in that** the two separate reactors operate alternately in hydrotreating and in oxidizing desulfurization, each carrying out a different treatment.

13. The process as claimed in claim 11, **characterized in that** one of the reactors always operates in hydrotreating and the other reactor always operates in oxidizing desulfurization.

14. The process as claimed in one of claims 8 to 13, **characterized in that** the hydrocarbon feedstock is a hydrocarbon feedstock with minimum and maximum boiling points of between 40 and 560°C.
